# FASCICULE DE BREVET EUROPEEN

(11) **EP 3 727 707 B1**
(45) Date de publication et mention de la délivrance du brevet: **18.11.2026**
(21) Numéro de dépôt: 18822044.6
(22) Date de dépôt: 17.12.2018
(51) Int. Cl.: C09J 5/06, B05D 7/02, B05D 1/32, B05D 5/10

(54) **PROCÉDÉ DE DÉPÔT D'UNE COLLE THERMOFUSIBLE LIQUIDE**
VERFAHREN ZUR ABSCHEIDUNG EINES FLÜSSIGEN HEISSSCHMELZKLEBSTOFFS
METHOD FOR DEPOSITING A LIQUID HOT MELT ADHESIVE

(30) Priorité: 21.12.2017 FR 1762778
(43) Date de publication de la demande: 28.10.2020
(73) Titulaire: OPmobility SE, 69007 Lyon (FR)
(72) Inventeur: ROSSIGNOL, Vincent, 69003 LYON (FR); VIDAL, Sophie, 01800 VILLIEU LOYES MOLLON (FR); BRIZIN, Jérôme, 01100 ARBENT (FR); TRESSE, David, 01390 SAINT-ANDRE DE CORCY (FR)
(74) Mandataire: LLR
(86) Numéro de dépôt international: PCT/EP2018/085187
(87) Numéro de publication internationale: WO 2019/121507

(56) Documents cités:
- EP-A1- 2 397 530
- WO-A1-2016/097654
- DE-A1- 19 737 065

## Description

L'invention concerne un procédé de dépôt sous forme liquide d'une colle thermofusible sur la surface d'une pièce. Plus particulièrement, l'invention s'intéresse au cas dans lequel on cherche à déposer la colle sur des zones prédéfinies de la surface de la pièce.

De manière connue, avant de peindre une pièce d'aspect destinée à équiper un véhicule automobile, il est proposé de déposer sur la zone à protéger une matière fluide telle qu'une colle, formant une couche de masquage temporaire et autrement désigné marouflage. Après l'application et le séchage du revêtement de décor, on enlève la couche de masquage temporaire. Ce procédé est décrit dans la publication FR 1 462 959.

Dans un véhicule automobile, sont considérées comme des pièces d'aspect, des éléments tels qu'un hayon arrière, un becquet avant, une porte latérale, un capot, etc.

Il arrive fréquemment que la pièce d'aspect présente une ou plusieurs zones à protéger qui doivent demeurer aussi propres que possible et rester dépourvues de peinture. C'est le cas par exemple des zones permettant de fixer la pièce d'aspect à une autre pièce par collage, lorsque l'assemblage des deux pièces se fait après le dépôt du revêtement de décor. Les zones destinées à recevoir la colle d'assemblage doivent rester exemptes de toute trace de peinture. C'est aussi le cas des zones de la pièce d'aspect qui doivent rester dépourvues de peinture dans un motif de décoration.

Lors de l'étape au cours de laquelle on réalise le revêtement de décor par pulvérisation, les fines gouttelettes de peinture peuvent se déposer sur la zone à protéger et qui est recouverte de la couche de masquage temporaire.

La couche de masquage temporaire est en règle générale une colle thermofusible (« hot melt » en anglais) qui devient fluide sous l'action de la chaleur et qui peut donc s'appliquer facilement à l'état liquide. Une fois appliquée, la colle se solidifie en refroidissant et adhère suffisamment sur la surface de la pièce sans laisser d'interstices par lesquels pourrait pénétrer la peinture, tout en conservant une bonne résistance aux chocs et aux accrochages pouvant survenir pendant la manipulation des pièces au cours du processus de mise en peinture.

Après refroidissement, la colle peut s'enlever rapidement et facilement du fait de sa souplesse résiduelle et de sa bonne tenue à température ambiante, autorisant de ce fait à retirer le marouflage d'un seul tenant, sans que celui-ci ne se fragmente.

On observe toutefois que, en raison même de sa destination, la surface de la pièce comporte des parties inclinées sur lesquelles la colle liquide se répand en fluant naturellement sous l'action des forces de gravité.

Il en résulte une perte de précision du marouflage au niveau des limites de la zone à protéger.

Le procédé selon l'invention a pour objet d'apporter une solution au problème posé ci-dessus.

Ce procédé de dépôt d'une colle thermofusible sous forme liquide sur la surface d'une pièce prévoit l'exécution des étapes au cours desquelles :
- Etape A : on dépose un cordon de colle sur tout ou partie d'une périphérie d'une zone de ladite surface à encoller, et on fait solidifier ledit cordon en le faisant refroidir pour constituer un muret formant une limite, qui empêche une colle déposée ultérieurement de se répandre au-delà de cette limite,
- Etape B : on dépose la colle sur le reste de la zone à encoller (2) de sorte que la colle liquide, fluant sous l'action de la gravité, est arrêtée dans sa progression par ledit cordon.

Le cordon de colle fait office de muret et empêche la colle de se répandre au-delà de cette limite. De plus, la matière formant la colle et la matière formant le cordon sont de même nature et forment un ensemble solidaire qu'il est facile d'enlever en une seule opération.

On observera ici, comme on le verra par la suite, que le procédé selon l'invention peut également être utilisé pour toutes les opérations d'encollage dans lesquelles on souhaite contenir la colle dans les limites précises d'une zone à encoller.

Le procédé selon l'invention peut aussi comprendre isolément, ou en combinaison, les caractéristiques suivantes :
- Le cordon de colle a une largeur comprise entre 10mm et 30mm et une hauteur comprise entre 0,5mm et 3mm.
- On dépose la colle à l'aide d'une buse d'encollage à débit constant.
- On dépose la colle à l'aide d'une buse d'encollage à débit variable et, au cours de l'étape A le débit de la buse d'encollage est inférieur au débit de la buse d'encollage au cours de l'étape B.
- Au cours de l'étape A, on déplace, à l'aide d'un robot, ladite buse par rapport à la surface de la pièce à une première vitesse linéaire donnée.
- Au cours de l'étape B, on déplace ladite buse par rapport à la surface de la pièce à une seconde vitesse linéaire donnée inférieure à la première vitesse linéaire.
- La première vitesse linéaire est au moins 2 fois supérieure à la seconde vitesse linéaire.
- Au cours de l'étape A, on fait refroidir le cordon en projetant un gaz frais sur une face de la pièce opposée à la surface supportant le cordon.
- Le cordon est disposé sur une bordure de la pièce et, au cours de l'étape A, on projette un gaz frais sur une face de la pièce opposée à la surface supportant le cordon, à la limite de la bordure de ladite pièce et dans une direction perpendiculaire au plan de la surface, de sorte que le flux d'air effleurant la bordure crée une barrière fluidique empêchant le cordon de fluer au-delà de ladite bordure.
- La surface à encoller de la pièce comporte une inclinaison par rapport à la direction verticale et, au cours de l'étape B, on laisse la colle thermofusible liquide se répandre par fluage sous l'action de la gravité.
- On déplace la pièce pour disposer la surface de la zone à encoller selon une inclinaison déterminée.
- Au cours de l'étape B, on laisse la colle se répandre depuis le cordon.
- Au cours de l'étape B, on laisse la colle se répandre jusqu'à ce qu'elle atteigne le cordon.
- La pièce à encoller est une pièce d'aspect d'un véhicule automobile et, à l'issue de l'étape B, on procède aux étapes suivantes :
   ∘ Etape C : on dépose par aspersion un revêtement de décor sur la surface de la pièce de sorte que la couche de colle forme une couche de masquage temporaire,
   ∘ Etape D : on laisse durcir le revêtement de décor et, après le retour de la couche de masquage temporaire sous forme solide et manipulable, on enlève ladite couche de masquage temporaire
- Au cours de l'étape A, on réalise une ou plusieurs languettes s'étendant depuis ledit cordon de colle et disposées en continuité de matière avec ledit cordon.
- La pièce comporte plusieurs zones à encoller disjointes et, au cours de l'étape A, on dépose sur la surface de la pièce un cordon reliant les zones à encoller de sorte que à l'issue de l'étape B, lesdites zones sont en continuité de matière les unes avec les autres.
- A l'issue de l'étape B, on assemble par collage la pièce supportant la colle et une autre pièce distincte de cette dernière.

L'invention sera mieux comprise à la lecture des figures annexées, qui sont fournies à titre d'exemple et ne présentent aucun caractère limitatif, dans lesquelles :
- La figure 1 représente une pièce d'aspect sur la surface de laquelle une couche de colle a été déposée dans des zones prédéfinies selon un premier mode de mise en œuvre de l'invention.
- La figure 2 représente une vue de détail du médaillon M₁ de la figure 1.
- La figure 3 représente une vue en coupe selon A-A lors de la dépose du cordon.
- La figure 4 représente une vue en coupe selon A-A lors du dépôt de la colle.
- La figure 5 représente une vue de détail du médaillon M₂ de la figure 1.
- La figure 6 représente une vue en coupe selon B-B du médaillon M₂ selon une forme particulière de mise en œuvre de l'invention lors du dépôt du cordon.
- La figure 7 représente une vue en coupe selon B-B lors du dépôt de la colle.
- La figure 8 représente une pièce d'aspect selon une variante d'exécution du premier mode de mise en œuvre de l'invention.
- La figure 9 représente une vue de détail du médaillon M₃ de la figure 8.
- La figure 10 représente une vue en coupe selon un second mode de mise en œuvre de l'invention.

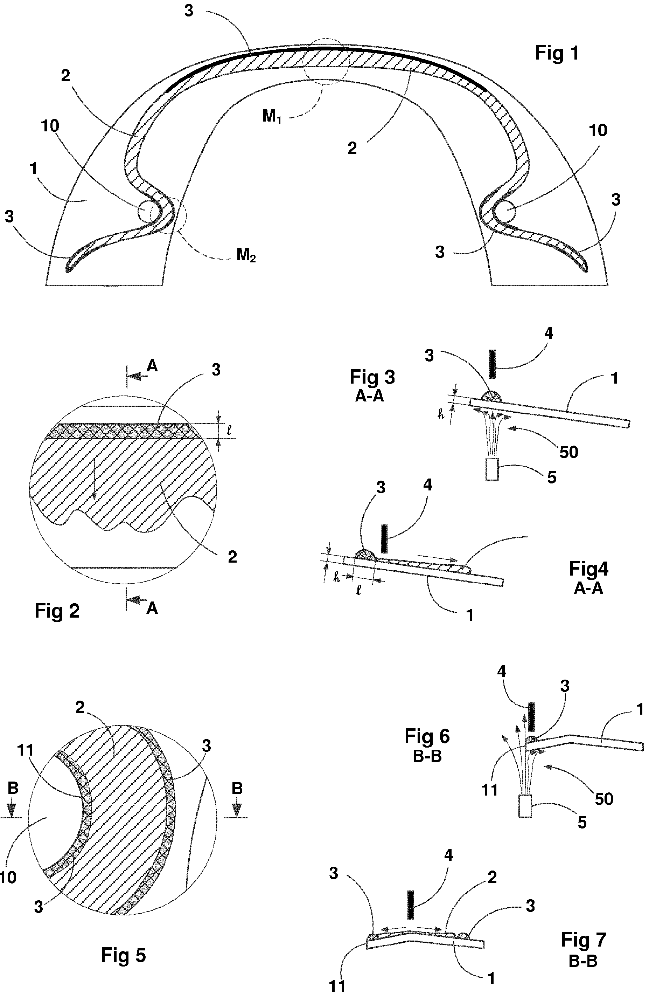

La pièce 1 représentée à la figure 1 peut être assimilée à une pièce d'aspect sur laquelle on souhaite déposer un revêtement de décor. Selon un premier mode de réalisation de l'invention, la pièce comporte des orifices 10 destinés à recevoir des éléments actifs tels que des feux de position ou encore des capteurs.

La zone hachurée 2 correspond à une zone que l'on souhaite conserver intacte et sans dépôt de peinture. Cette zone porte le même repère 2 après avoir été recouverte de colle.

Des cordons de colle 3, représentés par un trait gras, sont localisés sur la périphérie de la zone 2.

La réalisation des cordons de colle se fait usuellement en déplaçant, préférentiellement à l'aide d'un robot apte à suivre la surface de la pièce dans les trois dimensions, selon un parcours prédéterminé et à une première vitesse linéaire donnée, une buse reliée à un moyen d'extrusion tel qu'un fondoir. Plus la vitesse linéaire de la buse par rapport à la surface de la pièce est élevée plus le cordon est étroit et d'une hauteur faible.

L'épaisseur et la largeur du cordon vont donc dépendre en premier ordre du débit de colle au niveau de la tête de la buse, de la première vitesse linéaire et dans une certaine mesure de la viscosité de la colle. Plus la vitesse linéaire de la buse augmente, plus le cordon est étroit et moins il s'élève par rapport à la surface de la pièce.

On peut donc utiliser un fondoir à débit variable et augmenter le débit du fondoir en passant de l'étape A et l'étape B.

Toutefois, de manière à conserver une bonne régularité de dépôt de la colle au cours de la mise en œuvre des étapes A et B, on peut s'arranger pour conserver un débit de colle constant et des conditions d'extrusion stabilisées au niveau du fondoir.

Ces deux solutions peuvent se combiner deux à deux pour plus d'efficacité.

Les colles utilisées pour ces opérations de marquage temporaire comprennent en général comme constituant de base des polymères thermofusibles tels que le polyéthylène, le polypropylène, les polyoléfines et copolymères de ces polyoléfines, les polyamides, les polymères ou copolymères de type acétate de vinyle, ou des copolymères de type EVA auxquels sont rajoutés des additifs et des résines tackifiantes pour ajuster les caractéristiques de collage. A titre d'exemple, la colle polyamide thermofusible est sous forme liquide à partir d'une température de 110°C et redevient solide à une température inférieure à 90°C. De même, pour une colle de type polyamide couramment utilisée dans ce type d'application, il convient que la viscosité dynamique (µ) à 190°C reste par exemple comprise entre 1,5 Pa.s et 2,5 Pa.s. La mesure de la viscosité s'effectue de manière classique à l'aide d'un viscosimètre Brookfield, selon les standards ASTM. Le dépôt de la colle sous forme liquide, s'effectue alors de manière connue à une température comprise entre 140°C et 220°C.

En pratique, au cours de **l'étape A,** correspondant à l'étape au cours de laquelle on forme le cordon, on ajuste le débit et la première vitesse linéaire pour que la largeur l du cordon de colle soit comprise entre 10mm et 30mm et préférentiellement entre 20mm et 25mm, et la hauteur h comprise entre 0,5mm et 3mm.

On laisse la matière refroidir de sorte que le cordon retrouve une dureté suffisante pour qu'il soit possible de déposer la colle sur la zone à protéger pour former le marouflage 2 au cours de **l'étape B,** et que la colle soit empêchée de s'étendre au-delà de la limite formée par le cordon.

Pour des raisons évidentes de productivité on cherchera à réduire le temps entre la fin de l'étape A et le début de l'étape B qui correspond à un temps d'attente entre la pose du cordon et le dépôt de la colle sur la zone à encoller.

Il a été mis en évidence qu'il n'était pas nécessaire d'attendre que la colle soit totalement revenue à l'état solide, et qu'il devenait possible de passer à l'étape B lorsque la matière formant le cordon cessait de couler et commençait à se solidifier en surface tout en restant encore liquide au cœur du cordon. Le temps d'attente est alors de quelques dizaines de secondes selon la trajectoire à suivre et la géométrie de la pièce, lorsque la température de la surface de la pièce est à la température ambiante. Pour réduire ce temps d'attente, il est proposé, de propulser, à l'aide d'une buse 5, un gaz frais 50 directement sous la face de la pièce opposée à la surface d'encollage et au droit du cordon de colle 3, de manière à accélérer la baisse de la température de la colle liquide au niveau de la surface de la pièce, comme cela est illustré à la figure 3. Le temps d'attente est alors égal à moins d'une dizaine de secondes.

Le gaz utilisé peut être un gaz inerte tel que de l'azote pour réduire les effets de l'oxydation ou de l'air.

Le dépôt de la colle au cours de **l'étape** B se fait en déplaçant la buse à une seconde vitesse linéaire inférieure à la première vitesse linéaire de manière à déposer une quantité de colle supérieure par unité de surface. A titre d'exemple, la première vitesse linéaire peut être supérieure ou égale à au moins 2 fois la seconde vitesse linéaire.

La figure 2 est une vue détaillée du médaillon M₁ repéré à la figure 1. Le cordon 3 est disposé sur la périphérie supérieure de la zone à encoller. La colle de marouflage 2 est limitée par le cordon 3 avec lequel elle est en continuité de matière.

En référence à la figure 3 déjà citée et qui est une coupe selon A-A, on observe que la pièce 1 présente une légère déclivité. Lors du dépôt du cordon de colle 3 il devient intéressant de faire en sorte que le cordon ne se déforme pas en fluant sous l'influence de la gravité. Aussi, la projection de gaz frais 50 sous la surface de la pièce au droit du cordon 3 favorise également une solidification plus rapide de la colle et réduit cet inconvénient.

En revanche, lorsque seule la frontière délimitée par le cordon doit être contrôlée avec précision et que la limite de la zone encollée située du côté inférieur de la déclivité peut présenter un contour irrégulier on peut laisser la colle s'écouler depuis le cordon 3 vers la partie basse de la déclivité comme cela est illustré à la figure 4. Au cours de l'étape B, la buse 4 est alors disposée sur la partie proche du cordon du côté supérieur de la déclivité.

Il est également possible de déplacer la pièce, ou plus précisément le berceau sur lequel repose la pièce, pour disposer la surface de la zone à encoller selon une inclinaison déterminée et obtenir les mêmes effets que ceux cités au paragraphe précédent.

La figure 5 est une vue détaillée du médaillon M₂ repéré sur la figure 1. Le cordon 3 est cette fois situé en bordure 11 de la périphérie de l'orifice 10. Aussi, à l'étape A lors du dépôt du cordon 3, la colle encore liquide peut se répandre de manière non désirée au-delà de la bordure 11 et passer au travers de l'orifice 10.

Pour réduire ce phénomène, il est possible de projeter le flux de gaz frais selon une direction sensiblement perpendiculaire à la surface de la pièce au droit de la bordure 11, de sorte qu'une partie du flux de gaz frais 50 effleure la bordure 11 et forme une barrière fluidique empêchant la colle de se répandre au-delà de la bordure comme cela est illustré à la figure 6.

La figure 7 illustre le cas dans lequel la surface à encoller présente une double déclivité. Lors du dépôt de la colle de marouflage, on place la buse 4 au niveau de la crête où se rencontrent les deux déclivités et on laisse la colle fluer sous l'action de la gravité jusqu'à ce que la colle soit arrêtée dans sa progression par les cordons placés en périphérie de la zone.

Selon ce premier mode de mise en œuvre de l"invention l'étape B est suivie des étapes au cours desquelles :
- Etape C : on dépose par aspersion un revêtement de décor sur la surface de la pièce de sorte que la couche de colle forme une couche de masquage temporaire,
- Etape D : on laisse durcir le revêtement de décor et, après le retour de la couche de masquage temporaire sous forme solide et manipulable, on enlève ladite couche de masquage temporaire.

**L'étape** D s'exécute lorsque la couche de masquage temporaire redevient solide et manipulable. On entend ici par manipulable, le fait que la couche de masquage est à une température suffisamment basse pour redevenir solide mais reste encore suffisamment souple pour se détacher sans se rompre en formant des morceaux d'un seul tenant.

A titre d'exemple, pour une colle de type polyamide, cette étape D peut intervenir dans les quinze minutes suivant le durcissement du revêtement de décor et lorsque la couche de masquage est redescendue à une température inférieure à 60°C.

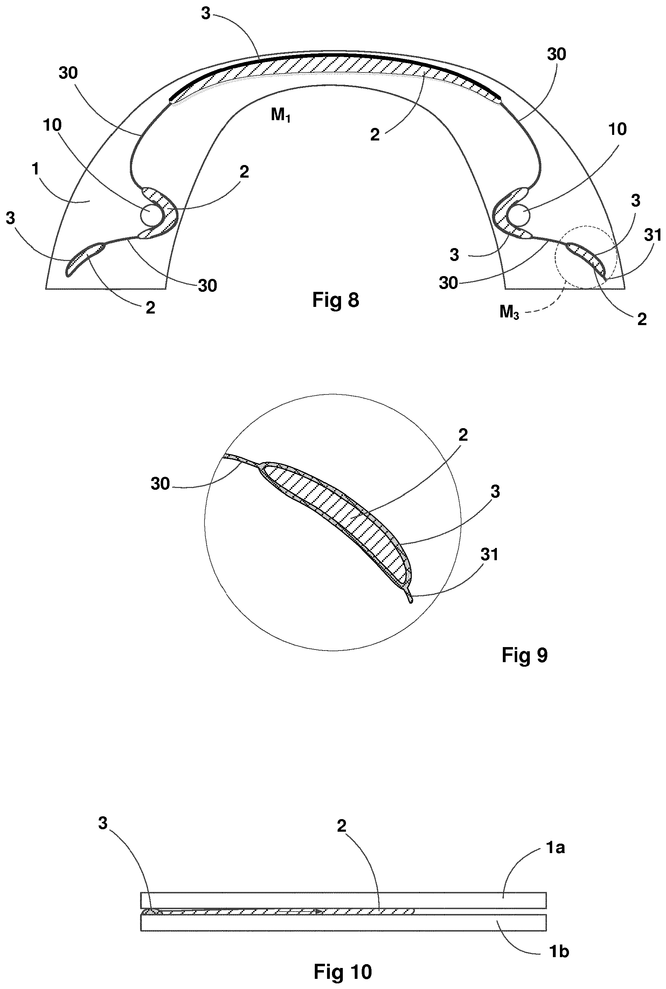

La figure 8 illustre une variante d'exécution du premier mode de mise en œuvre de l'invention dans laquelle les zones à encoller 2 de la surface 1 sont disjointes.

Dans le but de faciliter l'opération de décollage de la couche de masquage, on dépose sur la surface de la pièce au cours de l'étape A un cordon de liaison 30 reliant les zones à encoller de sorte que, à l'issue de l'étape B, lesdites zones sont en continuité de matière les unes avec les autres. Après avoir retiré la couche de masquage d'une première zone, les autres zones peuvent être retirées facilement en tirant sur le cordon de liaison 30.

Pour amorcer cette opération de décollement il est également possible de déposer une ou plusieurs languettes 31 s'étendant depuis ledit cordon de colle 3 et disposées en continuité de matière avec ledit cordon, comme cela est illustré à la figure 9.

Après avoir décollé la languette 31, l'opérateur peut alors faire venir l'ensemble du marouflage qui se trouve à l'intérieur de la zone bordée par ledit cordon.

La figure 10 illustre un second cas de mise en œuvre de l'invention dans lequel on cherche à assembler deux pièces par collage. Lorsqu'on presse les deux pièces l'une contre l'autre on observe souvent que la colle est chassée par les bords latéraux.

Pour combattre cet effet nuisible à la qualité esthétique de l'assemblage, on peut mettre successivement en œuvre les étapes A et B du procédé selon l'invention, puis mettre les deux pièces en joint l'une contre l'autre.

La pression exercée sur la colle et les effets de cisaillement déplacent transversalement la colle dans l'interface entre les deux pièces qui sont pressées l'une contre l'autre. Le cordon faisant office de muret peut alors se déformer et la colle liquide est empêchée de sortir de cette interface lorsqu'elle rencontre le cordon de colle disposé de préférence à proximité du bord des pièces à assembler.

On prendra la précaution de réaliser la mise en joint des deux pièces lorsque la colle formant le cordon est encore suffisamment chaude et souple pour autoriser l'écrasement du cordon de colle 3 et des deux pièces l'une contre l'autre, tout en maintenant la colle encore liquide dans les limites désirées.

Ainsi, comme on le voit à la lecture de ce qui précède l'invention peut faire l'objet de multiples applications dans des domaines souvent très éloignés, à l'image des exemples non limitatifs de mise en œuvre de l'invention tels que décrits ci-dessus.

### NOMENCLATURE

- 1: Pièce/ Pièce d'aspect.
- 10: Orifice.
- 11: Bordure.
- 2: Colle thermofusible/Zone à encoller.
- 3: Cordon de colle.
- 30: Cordon de liaison.
- 31: Languette de préhension.
- 4: Buse d'encollage.
- 5: Buse de soufflage d'air.
- 50: Gaz frais

## Revendications

1. Procédé de dépôt d'une colle thermofusible sous forme liquide sur une surface d'une pièce (1) dans lequel on exécute les étapes au cours desquelles :
- Etape A : on dépose un cordon de colle (3) sur tout ou partie d'une périphérie d'une zone (2) de ladite surface à encoller, et on fait solidifier ledit cordon (3) en le faisant refroidir pour constituer un muret formant une limite, qui empêche une colle déposée ultérieurement de se répandre au-delà de cette limite,
- Etape B : on dépose la colle sur le reste de la zone à encoller (2) de sorte que la colle liquide, fluant sous l'action de la gravité, est arrêtée dans sa progression par ledit cordon.

2. Procédé selon la revendication 1, dans lequel, au cours de l'étape A, on fait refroidir le cordon (3) en projetant un gaz frais (50) sur une face de la pièce (1) opposée à la surface supportant le cordon (3).

3. Procédé selon l'une quelconque des revendications 1 ou 2, dans lequel le cordon (3) est disposé sur une bordure (11) de la pièce (1) et dans lequel, au cours de l'étape A, on projette un gaz frais (50) sur une face de la pièce(1) opposée à la surface supportant le cordon (3), à la limite de la bordure (11) de ladite pièce et dans une direction perpendiculaire au plan de la surface, de sorte que le flux de gaz frais (50) effleurant la bordure (11) crée une barrière fluidique empêchant le cordon (3) de fluer au-delà de ladite bordure (11).

4. Procédé selon l'une quelconque des revendications 1 à 3, dans lequel le cordon de colle (3) a une largeur comprise entre 10mm et 30mm, et de préférence comprise entre 20mm et 25mm, et une hauteur comprise entre 0,5mm et 3mm.

5. Procédé selon l'une quelconque des revendications 1 à 4, dans lequel on dépose la colle à l'aide d'une buse d'encollage (4) à débit variable, et dans lequel, au cours de l'étape A le débit de la buse d'encollage (4) est inférieur au débit de la buse d'encollage au cours de l'étape B.

6. Procédé selon la revendication 5, dans lequel, au cours de l'étape A, on déplace, à l'aide d'un robot, ladite buse (4) par rapport à la surface de la pièce (1) à une première vitesse linéaire donnée.

7. Procédé selon la revendication 6, dans lequel, au cours de l'étape B, on déplace ladite buse (4) par rapport à la surface de la pièce (1) à une seconde vitesse linéaire donnée inférieure à la première vitesse linéaire.

8. Procédé selon la revendication 7, dans lequel la première vitesse linéaire est au moins 2 fois supérieure à la seconde vitesse linéaire.

9. Procédé selon l'une quelconque des revendications précédentes dans lequel la surface à encoller de la pièce (1) comporte une inclinaison par rapport à la direction verticale et dans lequel, au cours de l'étape B, on laisse la colle thermofusible liquide se répandre par fluage sous l'action de la gravité.

10. Procédé selon la revendication 9, dans lequel, au cours de l'étape B, on laisse la colle se répandre depuis le cordon (3).

11. Procédé selon la revendication 9, dans lequel, au cours de l'étape B, on laisse la colle se répandre jusqu'à ce qu'elle atteigne le cordon (3).

12. Procédé selon l'une quelconque des revendications 1 à 11, dans lequel la pièce à encoller est une pièce d'aspect d'un véhicule automobile, et dans lequel, à l'issue de l'étape B, on procède aux étapes suivantes :
- Etape C : on dépose par aspersion un revêtement de décor sur la surface de la pièce de sorte que la couche de colle forme une couche de masquage temporaire,
- Etape D : on laisse durcir le revêtement de décor et, après le retour de la couche de masquage temporaire sous forme solide et manipulable, on enlève ladite couche de masquage temporaire.

13. Procédé selon la revendication 12, dans lequel au cours de l'étape A, on réalise une ou plusieurs languettes (31) s'étendant depuis ledit cordon (3) de colle et disposées en continuité de matière avec ledit cordon (3).

14. Procédé selon la revendication 12 ou la revendication 13, dans lequel la pièce (1) comporte plusieurs zones à encoller (2) disjointes et dans lequel, au cours de l'étape A, on dépose sur la surface de la pièce (1) un cordon de liaison (31) reliant les zones à encoller de sorte que à l'issue de l'étape C, lesdites zones sont en continuité de matière les unes avec les autres.

15. Procédé selon l'une quelconque des revendications 1 à 14, dans lequel à l'issue de l'étape B, on assemble par collage la pièce (1a) supportant la colle et une autre pièce (1b) distincte de cette dernière.

## Patentansprüche

1. Verfahren zur Auftragung eines Heißschmelzklebstoffes in flüssiger Form auf einer Oberfläche eines Werkstücks (1), bei dem die Schritte durchgeführt werden, in denen:
- in Schritt A: ein Strang (3) aus Klebstoff auf dem gesamten oder einem Teil eines Umgangs einer Zone (2) der zu verklebenden Oberfläche aufgetragen wird und der Strang (3) zum Verfestigen gebracht wird, indem er zum Abkühlen gebracht wird, um eine Trennwand zu bilden, die eine Grenze bildet und einen später aufgetragenen Klebstoff daran hindert, sich über diese Grenze hinweg auszubreiten,
- in Schritt B: der Klebstoff auf der übrigen zu verklebenden Zone (2) aufgetragen wird, so dass der flüssige, unter der Einwirkung der Schwerkraft fließende Klebstoff durch den Strang in seiner Ausbreitung gestoppt wird.

2. Verfahren nach Anspruch 8, bei dem, in Schritt A, der Strang (3) zum Abkühlen gebracht wird, indem ein Frischgas (50) auf eine Fläche des Werkstücks (1), die der den Strang (3) tragenden Oberfläche gegenüberliegt, gespritzt wird.

3. Verfahren nach einem der Ansprüche 1 oder 2, bei dem der Strang (3) auf einer Einfassung (11) des Werkstücks (1) angeordnet wird, und bei dem, in Schritt A, ein Frischgas (50) auf eine Fläche des Werkstücks (1), die der den Strang (3) tragenden Oberfläche gegenüberliegt, gespritzt wird, an der Grenze der Einfassung (11) des Werkstücks und in einer Richtung senkrecht zu der Ebene der Oberfläche, so dass der die Einfassung (11) streifende Strom aus Frischgas (50) eine fluidische Barriere erzeugt, die den Strang (3) daran hindert, sich über die Einfassung (11) hinweg auszubreiten.

4. Verfahren nach einem der Ansprüche 1 bis 3, bei dem der Strang (3) aus Klebstoff eine Breite zwischen 10 mm und 30 mm, und bevorzugt zwischen 20 mm und 25 mm, und eine Höhe zwischen 0,5 mm und 3 mm hat.

5. Verfahren nach einem der Ansprüche 1 bis 4, bei dem der Klebstoff unter Verwendung einer Klebedüse (4) mit variablem Durchsatz aufgetragen wird und bei dem, in Schritt A, der Durchsatz der Klebedüse (4) kleiner ist als der Durchsatz der Klebedüse in Schritt B.

6. Verfahren nach Anspruch 5, bei dem, in Schritt A, unter Verwendung eines Roboters, die Düse (4) relativ zu der Oberfläche des Werkstücks (1) mit einer bestimmten ersten linearen Geschwindigkeit bewegt wird.

7. Verfahren nach Anspruch 6, bei dem, in Schritt B, die Düse (4) relativ zu der Oberfläche des Werkstücks (1) mit einer bestimmten zweiten linearen Geschwindigkeit bewegt wird, die kleiner ist als die erste lineare Geschwindigkeit.

8. Verfahren nach Anspruch 7, bei dem die erste lineare Geschwindigkeit mindestens 2 Mal größer ist als die zweite lineare Geschwindigkeit.

9. Verfahren nach einem der vorhergehenden Ansprüche, bei dem die zu verklebende Oberfläche des Werkstücks (1) eine Neigung gegenüber der senkrechten Richtung aufweist und bei dem, in Schritt B, der flüssige Heißschmelzklebstoff sich durch Fließen unter der Einwirkung der Schwerkraft ausbreitet.

10. Verfahren nach Anspruch 9, bei dem, in Schritt B, der Klebstoff sich von dem Strang (3) aus ausbreitet.

11. Verfahren nach Anspruch 9, bei dem, in Schritt B, der Klebstoff sich ausbreitet, bis er den Strang (3) erreicht.

12. Verfahren nach einem der Ansprüche 1 bis 11, bei dem das zu verklebende Werkstück ein sichtbares Teil eines Kraftfahrzeugs ist und bei dem, am Ende von Schritt B, die folgenden Schritte durchgeführt werden:
- Schritt C: eine Dekorbeschichtung wird durch Aufsprühen auf die Oberfläche des Werkstücks aufgebracht, so dass die Klebstoffschicht eine vorübergehende Maskierungsschicht bildet,
- Schritt D: die Dekorbeschichtung wird zum Aushärten gebracht und, nach der Rückkehr der vorübergehenden Maskierungsschicht in feste und grifffeste Form, wird die vorübergehende Maskierungsschicht abgezogen.

13. Verfahren nach Anspruch 12, bei dem, in Schritt A, eine oder mehrere Zungen (31) realisiert werden, die sich von dem Strang (3) aus Klebstoff aus erstrecken und in Materialeinheit mit dem Strang (3) angeordnet sind.

14. Verfahren nach Anspruch 12 oder Anspruch 13, bei dem das Werkstück (1) mehrere getrennte zu verklebende Zonen (2) aufweist und bei dem, in Schritt A, auf der Oberfläche des Werkstücks (1) ein Verbindungsstrang (31) aufgebracht wird, der die zu verklebenden Zonen verbindet, so dass am Ende von Schritt C die Zonen miteinander in Materialeinheit sind.

15. Verfahren nach einem der Ansprüche 1 bis 14, bei dem, am Ende von Schritt B, das den Klebstoff tragende Werkstück (1a) und ein anderes, von diesem letzten verschiedenes Werkstück (1b) durch Kleben zusammengefügt werden.

## Claims

1. A method for applying a hot-melt adhesive in liquid form to the surface of a workpiece (1), comprising the following steps:
- Step A: a bead of adhesive (3) is applied to all or part of the periphery of an area (2) of said surface to be bonded, and said bead (3) is allowed to solidify by cooling it to form a small wall constituting a boundary, which prevents any adhesive applied subsequently from spreading beyond this boundary,
- Step B: the adhesive is applied to the remainder of the area to be bonded (2) so that the liquid adhesive, flowing under the action of gravity, is stopped in its progress by said bead.

2. The method according to claim 1, in which, during step A, the bead (3) is cooled by blowing a cool gas (50) onto a face of the workpiece (1) opposite the surface supporting the bead (3).

3. The method according to any one of claims 1 or 2, in which the bead (3) is disposed on an edge (11) of the workpiece (1) and in which, during step A, a cool gas (50) is blown onto a face of the workpiece (1) opposite the surface supporting the bead (3), at the limit of the edge (11) of said workpiece and in a direction perpendicular to the plane of the surface, such that the flow of cool gas (50) skimming the edge (11) creates a fluid barrier preventing the bead (3) from flowing beyond said edge (11).

4. The method according to any one of claims 1 to 3, in which the bead of adhesive (3) has a width of between 10 mm and 30 mm, and preferably between 20 mm and 25 mm, and a height of between 0.5 mm and 3 mm.

5. The method according to any one of claims 1 to 4, in which the adhesive is applied using a variable-flow adhesive nozzle (4), and in which, during step A, the flow rate of the adhesive nozzle (4) is lower than the flow rate of the adhesive nozzle during step B.

6. The method according to claim 5, in which, during step A, said nozzle (4) is moved relative to the surface of the workpiece (1) at a given first linear speed by means of a robot.

7. The method according to claim 6, in which, during step B, said nozzle (4) is moved relative to the surface of the workpiece (1) at a second given linear speed that is lower than the first linear speed.

8. The method according to claim 7, in which the first linear speed is at least twice the second linear speed.

9. The method according to any one of the preceding claims, in which the surface of the workpiece (1) to be bonded is inclined relative to the vertical direction and in which, during step B, the liquid hot-melt adhesive is allowed to spread by creep under the action of gravity.

10. The method according to claim 9, in which, during step B, the adhesive is allowed to spread from the bead (3).

11. The method according to claim 9, in which, during step B, the adhesive is allowed to spread until it reaches the bead (3).

12. The method according to any one of claims 1 to 11, in which the workpiece to be bonded is a body panel of a motor vehicle, and in which, following step B, the following steps are carried out:
- Step C: a decorative coating is sprayed onto the surface of the workpiece so that the adhesive layer forms a temporary masking layer,
- Step D: the decorative coating is allowed to cure and, once the temporary masking layer has returned to a solid, handleable state, said temporary masking layer is removed.

13. The method according to claim 12, in which, during step A, one or more tabs (31) are formed, extending from the adhesive bead (3) and arranged in continuous material with the bead (3).

14. The method according to claim 12 or claim 13, in which the workpiece (1) comprises a plurality of separate bonding areas (2) and in which, during step A, a bonding bead (31) is applied to the surface of the workpiece (1), connecting the bonding areas so that, at the end of step C, said areas are in continuous material contact with one another.

15. The method according to any one of claims 1 to 14, in which, at the end of step B, the workpiece (1a) carrying the adhesive and another part (1b) distinct from the former are joined by bonding.
